(19) Europäisches Patentamt
European Patent Office
Office européen des brevets

(11) **EP 2 331 983 B1**

(12) **FASCICULE DE BREVET EUROPEEN**

(45) Date de publication et mention
de la délivrance du brevet:
**22.08.2012 Bulletin 2012/34**

(21) Numéro de dépôt: **09815689.6**

(22) Date de dépôt: **25.09.2009**

(51) Int Cl.:
**G01S 19/26** *(2010.01)* **H04B 1/7075** *(2011.01)*

(86) Numéro de dépôt international:
**PCT/EP2009/062426**

(87) Numéro de publication internationale:
**WO 2010/034800 (01.04.2010 Gazette 2010/13)**

(54) **PROCÉDÉ POUR OPTIMISER UNE ACQUISITION D'UN SIGNAL À SPECTRE ÉTALÉ PROVENANT D'UN SATELLITE PAR UN RÉCEPTEUR MOBILE**

VERFAHREN ZUR OPTMIIERTEN ERFASSUNG EINES SPREIZSPEKTRUMSIGNALS AUS EINEM SATELLITEN ÜBER EINEN MOBILEN EMPFÄNGER

METHOD FOR OPTIMISING AN ACQUISITION OF A SPREAD-SPECTRUM SIGNAL FROM A SATELLITE BY A MOBILE RECEIVER

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **26.09.2008 FR 0805320**

(43) Date de publication de la demande:
**15.06.2011 Bulletin 2011/24**

(73) Titulaires:
• **THALES**
**92200 Neuilly-sur-Seine (FR)**
• **Centre National d'Etudes Spatiales (C.N.E.S.)**
**75001 Paris (FR)**

(72) Inventeurs:
• **KUBRAK, Damien**
**F-31400 Toulouse (FR)**
• **MONNERAT, Michel**
**F-31240 Saint-Jean (FR)**
• **RIES, Lionel**
**81290 Viviers Les Montagnes (FR)**
• **ARTAUD, Géraldine**
**F-31500 Toulouse (FR)**

(74) Mandataire: **Nguyen, Dominique et al**
**Marks & Clerk France**
**Immeuble Visium**
**22, avenue Aristide Briand**
**94117 Arcueil Cedex (FR)**

(56) Documents cités:
**WO-A-99/66649**      **US-A- 6 133 873**
**US-A1- 2006 012 515**      **US-A1- 2006 115 022**
**US-B1- 6 850 557**

• **ELDERS-BOLL H ET AL: "Efficient Differentially Coherent Code/Doppler Acquisition of Weak GPS Signals" SPREAD SPECTRUM TECHNIQUES AND APPLICATIONS, 2004 IEEE EIGHTH INTERNAT IONAL SYMPOSIUM ON SYDNEY, AUSTRALIA 30 AUG.-2 SEPT. 2004, PISCATAWAY, NJ, USA,IEEE, 30 août 2004 (2004-08-30), pages 731-735, XP010755130 ISBN: 978-0-7803-8408-8**

**Description**

La présente invention concerne un procédé pour optimiser un processus d'acquisition d'un signal à spectre étalé, mis en oeuvre par un récepteur mobile. L'invention s'applique par exemple à tout signal de navigation provenant d'un système global de navigation par satellites de type GPS (Global Positioning System), Galileo.

On entend ici par « récepteur mobile » aussi bien les dispositifs (ou récepteurs) dédiés exclusivement au positionnement par satellites portables ou embarqués dans un véhicule terrestre, maritime ou aérien que les terminaux de communication équipés d'un dispositif de positionnement par satellites, comme par exemple des téléphones mobiles, ou d'ordinateurs portables ou des assistants personnels numériques (ou PDA), éventuellement de type communicant.

Dans un système de positionnement par satellites utilisant des récepteurs du type GNSS (Global Navigation Satellite System), les signaux de données permettant au récepteur de calculer son positionnement proviennent de différents satellites appartenant à une constellation de satellites de positionnement (quatre au minimum pour déterminer quatre inconnues correspondant aux coordonnées géographiques x, y, z et temporelles t du récepteur).

Le positionnement par satellites consiste en un enchaînement de deux étapes. La première étape, dite d'acquisition, consiste à déterminer, au niveau du récepteur mobile concerné, les codes d'étalement pseudo-aléatoires qui modulent les signaux provenant des satellites appartenant à la constellation et rapportés à un temps de référence. Il s'agit en fait de « comparer » les signaux reçus des satellites à des répliques de signaux élaborés localement par le récepteur et résultant d'hypothèses sur le temps de référence et sur la fréquence de cadencement des satellites, afin d'en déduire les codes pseudo-aléatoires qui modulent lesdits signaux reçus ou en d'autres termes de synchroniser l'horloge de cadencement du récepteur et sa fréquence sur l'horloge et la fréquence de chaque satellite. Pour cela, une recherche en temps-fréquence de l'énergie du signal provenant du satellite est effectuée, cette recherche étant habituellement réalisée par des mesures de corrélation reposant sur des couples d'hypothèses temporelle et fréquentielle afin de déterminer la corrélation maximale entre le signal reçu et la réplique locale du récepteur.

La seconde étape consiste à déterminer la position du récepteur mobile à partir des codes acquis et de données de navigation notamment contenues dans les signaux reçus. Cette seconde étape peut être plus précisément subdivisée en trois sous-étapes : une sous-étape de détermination à partir des codes pseudo-aléatoires acquis, des temps de propagation des signaux entre chacun des satellites et le récepteur, une sous-étape de détermination, à partir des données de navigation contenues dans les signaux et des temps de propagation, de pseudo-distances entre le récepteur et chacun *des satellites, et une sous-étape de détermination* de la position du récepteur à partir des pseudo-distances. Un exemple de système de positionnement par satellite est décrit dans le document US 2006/0115022.

La précision de chaque temps de propagation, et donc de chaque pseudo-distance, détermine directement la précision de la position. Or, la précision de chaque temps de propagation dépend de la qualité de l'acquisition des codes pseudo-aléatoires du signal reçu correspondant, laquelle est dépendante de la qualité dudit signal reçu. Par conséquent, lorsque l'un au moins des signaux reçus d'un satellite est de mauvaise qualité, ce qui est relativement fréquent, notamment dans les environnements accidentés ou encombrés tels que les milieux urbains, la position déterminée est généralement entachée d'erreur. On peut même se trouver momentanément dans l'impossibilité de déterminer la position du récepteur, alors même que les signaux provenant des autres satellites sont de bonne qualité.

Le récepteur possède trois incertitudes fréquentielles auxquelles s'ajoute une inconnue sur la date le conduisant à effectuer la recherche en temps et en fréquence de l'énergie provenant d'un satellite. Ces trois incertitudes fréquentielles sont l'effet Doppler lié à la mobilité du satellite, l'incertitude lié à la précision de l'horloge du récepteur, et l'effet Doppler lié à la mobilité du récepteur. L'effet Doppler lié au mouvement du satellite peut être déterminé de manière connue en utilisant par exemple un serveur d'assistance tel que celui utilisé dans les techniques de localisation de type AGPS (Assisted GPS). Les oscillateurs locaux des horloges sont de plus en plus performants et deviennent de plus en plus stables. L'effet Doppler lié au mouvement du récepteur devient la source prépondérante des incertitudes sur la localisation du pic de corrélation et donc du récepteur.

Ne pas prendre en compte l'effet Doppler lié au récepteur peut avoir un effet dramatique dans le cas de l'acquisition de signaux de faible énergie qui nécessitent d'intégrer le signal reçu de manière cohérente sur une longue durée temporelle. En effet, la largeur des fenêtres d'intégration des hypothèses fréquentielles étant inversement proportionnelle à la durée d'intégration, plus le temps d'intégration de manière cohérente est long, plus la largeur des fenêtres d'intégration des hypothèses fréquentielles est petite et donc plus le nombre d'hypothèses fréquentielles est grand. Les balayages en temps et en fréquences impliquent alors une puissance de calcul et un temps de traitement des données très importants pour le récepteur et augmentent l'incertitude sur la localisation du récepteur. Dans un schéma d'acquisition classique, comme décrit par exemple dans le document US 2006/0012515, l'intégration cohérente s'effectue généralement sur une hypothèse de fréquence qui reste la même tout au long de la durée d'intégration, ce qui suppose que la fréquence effective du signal reçu est stable sur la durée d'intégration. Lors d'une intégration cohérente longue, le doppler lié au mouvement de l'utilisateur a pour effet de faire varier la fréquence effective reçue durant ladite intégration et ce qui rend inopérant l'intégration si celle-ci s'effectue sur une hypothèse de stabilité.

La présente invention a pour but de remédier à ce problème en proposant un procédé pour optimiser une acquisition d'un signal de navigation provenant d'un satellite par un récepteur mobile prenant en compte l'effet Doppler lié au récepteur et permettant de réduire le nombre d'hypothèses fréquentielles à explorer lors de la recherche du pic de corrélation du signal et de diminuer le temps de calcul au sein du récepteur.

A cet effet, l'invention a pour objet un procédé pour optimiser une acquisition d'un signal à spectre étalé provenant d'un satellite par un récepteur mobile, selon la revendication 1.

Avantageusement, l'énergie totale de chaque chemin possible d'évolution de la fréquence du signal est obtenue en sommant de manière cohérente les résultats de corrélation entre les instants initial $t_0$ et final $t_n$, la fréquence prenant successivement toutes les valeurs de fréquences situées sur le chemin choisi.

Préférentiellement, pour chaque hypothèse de fréquence initiale, les chemins possibles d'évolution de la fréquence du signal sont déterminés en prenant en compte des informations délivrées par au moins un capteur inertiel localisé dans le récepteur.

Avantageusement, les informations délivrées par le capteur inertiel sont prises en compte dans une enveloppe d'erreur établie à partir des caractéristiques du capteur.

Optionnellement, lorsque la variation des informations délivrées par le capteur, entre deux instants de mesure, est inférieure à un seuil de variation prédéterminé, il est décidé que le récepteur n'a pas bougé entre les deux instants de mesure et il est alors fait l'hypothèse d'une fréquence stable lors de l'intégration.

D'autres particularités et avantages de l'invention apparaîtront clairement dans la suite de la description donnée à titre d'exemple purement illustratif et non limitatif, en référence aux dessins schématiques annexés qui représentent :

- figure 1 : un exemple d'architecture d'un récepteur d'un système global de navigation par satellite, selon l'invention ;
- figure 2: un exemple de graphique fréquence-temps illustrant les hypothèses de fréquences à explorer lors d'une acquisition sur un temps d'intégration donné;
- figure 3 : un exemple des chemins possibles à explorer pour une hypothèse de fréquence initiale $f_1$ donnée, selon l'invention;
- figure 4: un exemple des chemins possibles pour une hypothèse de fréquence initiale $f_1$ donnée, en tenant compte de l'information délivrée par un capteur inertiel, selon l'invention.

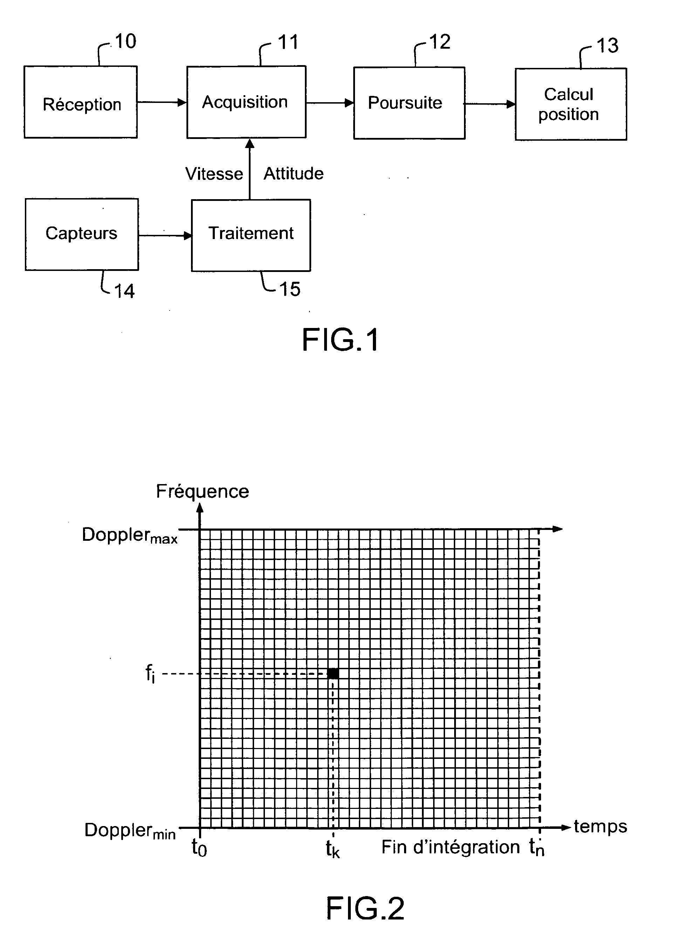

L'architecture représentée sur la figure 1 comporte des moyens de réception 10 des signaux radiofréquences émis par un satellite, des moyens d'acquisition 11 des signaux reçus pour déterminer les codes d'étalement pseudo-aléatoires qui modulent les signaux provenant du satellite, des moyens de poursuite 12 des signaux permettant de compenser la dynamique du récepteur, des moyens de calcul 13 de la position du récepteur. En outre, l'architecture comporte des capteurs inertiels 14 pour délivrer, après traitement par des moyens de traitement 15, des informations relatives à la vitesse et à l'attitude du récepteur par rapport au satellite.

Le graphique de la figure 2 comporte un axe vertical correspondant aux hypothèses de fréquence à explorer et un axe horizontal correspondant au temps d'intégration. Les hypothèses de fréquences à explorer sont comprises entre une fréquence minimale liée à un effet Doppler minimal et une fréquence maximale liée à un effet Doppler maximal. L'axe des temps et l'axe des fréquences sont découpés respectivement en durées temporelles élémentaires et en bandes de fréquences élémentaires et chaque couple fréquence-temps correspond à une case particulière du quadrillage de la figure 2.

A chaque hypothèse de fréquence correspond une disposition relative récepteur-satellites et un décalage horloge récepteur possibles à un instant donné. Entre deux instants donnés $t_0$ et $t_n$, la position du récepteur peut évoluer suivant une pluralité de chemins possibles. Pour connaître la position du récepteur à chaque instant, l'invention consiste donc à explorer chaque chemin possible et à calculer l'énergie du signal pour chacun de ces chemins. Le chemin qui possède l'énergie la plus forte est le chemin suivi par le récepteur. A chaque fréquence $f_i$ donnée et à un instant $t_k$ donné correspondant à une case élémentaire du graphique de la figure 2, l'énergie du signal est calculée. Pour cela, le récepteur corrèle le signal reçu avec une réplique du code pseudo-aléatoire du satellite qui a envoyé le signal. Le code pseudo-aléatoire du satellite est connu et ne change pas pendant toute la vie du satellite. Le résultat de la corrélation à la fréquence $f_i$ et à l'instant $t_k$ s'écrit :

$$s(f_i, t_k, \tau) = \int_{kT}^{(k+1)T} r(t) \cdot c\left((t - kT - \tau)\frac{f_i}{f_c} R_c\right) \cdot e^{-2j\pi f_i t} dt$$

Où $r(t)$ est le signal reçu par le récepteur, $c(t)$ est le code d'étalement utilisé dans la modulation du signal reçu, T est le temps d'intégration cohérent qui généralement correspond à une période du code d'étalement c(t), $\tau$ est le décalage estimé entre le code d'étalement reçu et le code d'étalement émis, fc est la fréquence de la porteuse (typiquement 1575,42MHz pour GPS L1C/A), Rc est le rythme de bribe du code d'étalement (typiquement 1.023Mbribes/s pour GPS L1C/A). Par exemple, dans le cas d'un signal GPS C/A, T est typiquement égal à 1 ms. Mais T pourrait avoir une toute autre valeur.

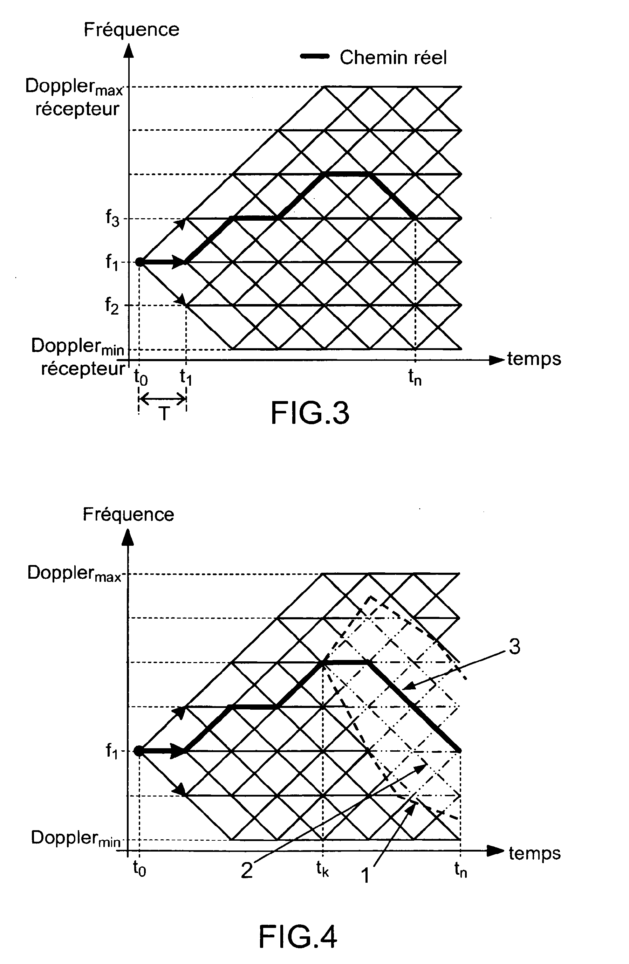

Lorsque toutes les corrélations élémentaires correspondant à chaque hypothèse de fréquence ont été réalisées, le procédé selon l'invention consiste à choisir une première hypothèse de fréquence initiale $f_1$ correspondant à un instant initial $t_0$, puis à choisir un chemin particulier d'évolution de la fréquence du signal entre $t_0$ et $t_n$ parmi tous les chemins possibles et à déterminer l'énergie totale du signal correspondant à ce chemin par sommation de chaque élément s($f_i$, $t_k$ $\tau$) constituant le chemin. $t_n$ correspond à l'instant final de la recherche. La figure 3 illustre l'ensemble des chemins possibles à partir d'une hypothèse de fréquence initiale $f_1$ à un instant $t_0$ jusqu'à l'instant $t_n$. L'énergie totale correspondant à un chemin choisi est obtenue en sommant de manière cohérente les résultats de corrélation s($f_1$, $t_k$, , $\tau$), $t_k$ prenant successivement toutes les valeurs entre $t_0$ et $t_n$ et $f_1$ prenant successivement toutes les valeurs de fréquences situées sur le chemin sélectionné. Par exemple, à l'instant $t_1$, la valeur de la fréquence peut avoir évolué à la valeur $f_2$ ou $f_3$ ou être restée inchangée.

A partir de la même hypothèse de fréquence, tous les chemins possibles sont ensuite sélectionnés successivement, les uns après les autres, et leur énergie respective est calculée de façon similaire. Parmi tous les chemins possibles, il n'existe qu'un unique chemin permettant une recombinaison des résultats de corrélation non destructive, illustré en trait épaissi 3 sur la figure 3. Ce chemin dépend entre autre de la dynamique relative entre le satellite et le récepteur. A ce chemin correspond donc une énergie du signal maximale. Le procédé selon l'invention consiste alors pour chaque hypothèse de fréquence initiale, à sélectionner le chemin dont l'énergie totale est la plus forte et à décider que, parmi tous les chemins sélectionnés à chaque hypothèse de fréquence, le chemin qui a l'énergie la plus forte est le chemin le plus vraisemblable et correspond au chemin réel suivi par le récepteur.

Ce procédé nécessitant d'explorer tous les chemins possibles pour chaque hypothèse de fréquence initiale est très lourd et très long en temps de traitement. Avantageusement, pour réduire le nombre de chemins à explorer pour chaque hypothèse de fréquence initiale, entre les instants initial et final, le procédé comporte une étape intermédiaire consistant à utiliser au moins un capteur inertiel, par exemple de type MEMS (Micro-Electro-Mechanical Systems). Le capteur inertiel est placé par exemple sur le récepteur et délivre des informations relatives à la position du récepteur telles que par exemple l'accélération et/ou la position angulaire du récepteur, et/ou le cap par rapport au nord magnétique, ces informations étant délivrées pour les trois directions de l'espace. Pour cela, le capteur inertiel peut comporter un accéléromètre trois axes et/ou un gyroscope trois axes et/ou un magnétomètre trois axes. Les informations délivrées par le capteur inertiel sont ensuite traitées par les moyens de traitement pour obtenir l'attitude et/ou la position et/ou la vitesse du récepteur. Ces données sont alors transmises aux moyens d'acquisition pour lors de la phase d'acquisition tenir compte des positions successives du récepteur données par le capteur inertiel et limiter ainsi les hypothèses des évolutions de fréquence au cours du temps et donc le temps de traitement pendant la phase d'acquisition. En effet, une hypothèse fréquentielle correspond à une hypothèse sur l'effet Doppler et l'effet Doppler est proportionnel à la vitesse relative entre l'utilisateur et le satellite. Par conséquent, l'information donnée par le capteur inertiel est une information relative à l'évolution de l'effet Doppler pendant l'acquisition. Cette information permet de bomer les possibilités de recombinaisons possibles entre les instants initial et final.

La figure 4 est un exemple illustrant les chemins possibles pour une hypothèse de fréquence initiale $f_1$ donnée, en tenant compte de l'information délivrée par le capteur inertiel. Le chemin réel 3 correspondant à l'énergie maximale du signal est représenté en trait épaissi, les chemins 2 à explorer en raison de l'incertitude sur les informations issues du capteur inertiel sont représentés dans l'enveloppe d'erreur 1 en traits pointillés. En effet, les informations délivrées par un capteur inertiel présentent une marge d'erreur qui augmente, notamment, avec le temps de fonctionnement du capteur et la température. Les caractéristiques des capteurs étant données par le fabriquant, après traitement, la marge d'erreur sur les informations délivrées par le capteur peut être convertie en fréquence et une enveloppe d'erreur de la fréquence correspondant à un capteur donné peut être déterminée aisément à partir de ces caractéristiques.

Ainsi, comme le montre la figure 4, le procédé consiste alors, lorsque toutes les corrélations élémentaires correspondant à chaque hypothèse de fréquence ont été réalisées, à sélectionner une hypothèse de fréquence initiale $f_1$ correspondant à un instant initial to, à suivre le chemin extrait des informations données par le capteur jusqu'à un instant $t_k$ correspondant au moment où les données délivrées par le capteur commencent à présenter une marge d'erreur, puis entre l'instant $t_k$ et l'instant final $t_n$, à sélectionner un chemin parmi tous les chemins possibles compris dans l'enveloppe d'erreur de fréquence établie préalablement.

Avantageusement, le procédé peut comporter aussi une option consistant à réaliser une discrimination de l'information donnée par le capteur lorsque celui-ci indique que le récepteur n'a pas bougé. La discrimination est réalisée en introduisant un seuil de déplacement au-dessous duquel il est décidé de suivre l'information indiquée par le capteur. Ainsi, dans le cas ou le capteur indique que, entre deux instants de mesure consécutifs, le récepteur a bougé d'une distance inférieure au seuil de déplacement, le procédé considère que le récepteur, et donc la fréquence, n'a pas bougé pendant ces deux instants de mesure.

Le procédé présente les avantages de permettre la détection de toute l'énergie du signal reçu pendant tout le temps d'intégration sans pénaliser le temps de traitement et donc le temps de réponse du récepteur. En outre, le récepteur gagne en sensibilité dans sa capacité de détection des énergies faibles car le procédé permet la prise en compte d'un plus grand nombre hypothèses fréquence-temps.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. procédé pour optimiser une acquisition d'un signal à spectre étalé provenant d'un satellite par un récepteur mobile, consistant :

   - à recevoir (10) un signal émis par.au moins un émetteur, le signal étant modulé par un code pseudo-aléatoire,
   - à élaborer une réplique locale du code pseudo-aléatoire du signal émis,
   - à émettre une pluralité d'hypothèses relatives à la fréquence $f_i$ du signal reçu à un instant initial $t_0$ et à l'évolution de cette fréquence au cours du temps jusqu'à un instant final $t_n$ correspondant à un temps d'intégration, chaque hypothèse d'évolution de la fréquence du signal entre l'instant initial et l'instant final étant appelée chemin d'évolution,
   - à calculer les fonctions de corrélation $s(f_i, t_k, \tau)$ de tous les couples d'hypothèses fréquence - temps $(f_i, t_k)$, $t_k$ étant un instant compris entre $t_0$ et $t_n$, $\tau$ étant le décalage temporel entre le code pseudo-aléatoire reçu et le code pseudo-aléatoire émis,
   **caractérisé en ce qu'**il consiste en outre :

     - à acquérir, à partir d'au moins un capteur inertiel (14), des informations de positions successives du déplacement du récepteur mobile entre les instants $t_0$ et $t_n$
     - à partir des informations de positions successives, à déduire un effet Doppler entre le récepteur mobile et le satellite entre les instants $t_0$ et $t_n$ et à déterminer une évolution de la fréquence $f_i$ entre les instants $t_0$ et $t_n$ correspondant à l'effet Doppler,
     - à émettre une première hypothèse de fréquence initiale $f_1$ relative à la fréquence du signal reçu à l'instant initial $t_0$ puis à sélectionner les chemins d'évolution de la fréquence $f_1$ correspondant aux informations de positions délivrées par le capteur inertiel (14) et à des hypothèses d'évolution de la fréquence comprises dans une enveloppe d'erreur (1) établie à partir des caractéristiques du capteur inertiel (14),
     - à déterminer l'énergie totale respective, correspondant au maximum de la fonction de corrélation appelé aussi pic de corrélation, de tous les chemins d'évolution sélectionnés entre les instants $t_0$ et $t_n$, l'énergie totale de chaque chemin d'évolution sélectionné étant obtenue en sommant de manière cohérente des résultats de corrélation entre les instants initial $t_0$ et final $t_n$, la fréquence prenant successivement toutes les valeurs de fréquences situées sur le chemin d'évolution choisi,
     - à valider le chemin d'évolution dont l'énergie totale est la plus forte,
     - à choisir successivement toutes les autres hypothèses de fréquences initiales possibles et, pour chaque hypothèse de fréquence initiale, à valider le chemin d'évolution de la fréquence du signal dont l'énergie totale est la plus forte,
     - à décider que, parmi tous les chemins validés à chaque hypothèse de fréquence, le chemin qui a l'énergie la plus forte (3) est le chemin le plus vraisemblable et correspond au chemin réel suivi par le récepteur.

2. Procédé selon la revendication 1, **caractérisé en ce que** lorsque la variation des informations délivrées par le capteur, entre deux instants de mesure, est inférieure à un seuil de variation prédéterminé, il est décidé que le récepteur n'a pas bougé entre les deux instants de mesure et il est alors fait l'hypothèse d'une fréquence stable lors de l'intégration.

## Claims

1. A method for optimising an acquisition, by a mobile receiver, of a spread-spectrum signal originating from a satellite, comprising:

- receiving (10) a signal emitted by at least one emitter, the signal being modulated by a pseudo-random code;
- elaborating a local replica of the pseudo-random code of the emitted signal;
- emitting a plurality of hypotheses relating to the frequency $f_i$ of the signal received at an initial instant to and to the evolution of this frequency over time up to a final instant $t_n$ corresponding to an integration time, each hypothesis of the evolution of the signal frequency between the initial instant and the final instant being referred to as evolution path;
- calculating the correlation functions $s(f_i, t_k, \tau)$ of all of the pairs of frequency-time hypotheses $(f_i, t_k)$, $t_k$ being an instant between $t_o$ and $t_n$, $\tau$ being the time shift between the received pseudo-random code and the emitted pseudo-random code;

**characterised in that** it further comprises:

- acquiring, from at least one inertial sensor (14), information relating to successive positions of the displacement of the mobile receiver between the instants $t_o$ and $t_n$;
- deducing, from the successive position information, a Doppler effect between the mobile receiver and the satellite between the instants $t_o$ and $t_n$ and determining an evolution of the frequency $\mathbf{f_i}$ between the instants $t_o$ and $t_n$ corresponding to the Doppler effect;
- emitting a first hypothesis of the initial frequency $f_1$ relative to the frequency of the signal received at the initial instant $t_o$, then selecting the evolution paths of the frequency $f_1$ corresponding to the position information delivered by the inertial sensor (14) and to the evolution hypotheses of the frequency included in an error envelope (1) established from the characteristics of the inertial sensor (14);
- determining the respective total energy corresponding to the maximum of the correlation function, also referred to as correlation peak, of all of the evolution paths selected between the instants $\mathbf{t_o}$, and $t_n$, the total energy of each selected evolution path being obtained by coherently adding correlation results between the initial $t_o$ and final $t_n$ instants, the frequency successively assuming all of the frequency values that are located on the selected evolution path;
- confirming the evolution path with the greatest total energy;
- successively selecting all of the other possible initial frequency hypotheses and, for each initial frequency hypothesis, confirming the evolution path of the frequency of the signal with the greatest total energy;
- deciding that, from all of the paths that are confirmed at each frequency hypothesis, the path with the greatest energy (3) is the most likely path and corresponds to the actual path that is followed by the receiver.

2. The method according to claim 1, **characterised in that** when the variation of information, between two measurement instants, that is delivered by the sensor is below a predetermined variation threshold it is decided that the receiver has not moved between the two measurement instants and the hypothesis is thus made that the frequency is stable during the integration.

**Patentansprüche**

1. Verfahren zum Optimieren einer Erfassung, durch einen mobilen Empfänger, eines von einem Satelliten kommenden Spreizspektrumsignals, das die folgenden Schritte beinhaltet:

- Empfangen (10) eines von wenigstens einem Sender gesendeten Signals, wobei das Signal durch einen pseudozufälligen Code moduliert ist,
- Ausarbeiten einer örtlichen Kopie des pseudozufälligen Codes des gesendeten Signals,
- Senden mehrerer Hypothesen in Bezug auf die Frequenz $f_i$ des empfangenen Signals zu einem Anfangszeitpunkt $t_0$ und Entwickeln dieser Frequenz im Laufe der Zeit bis zu einem Endzeitpunkt $t_n$, die einer Integrationszeit entspricht, wobei jede Hypothese der Entwicklung der Frequenz des Signals zwischen dem Anfangszeitpunkt und dem Endzeitpunkt als Entwicklungsweg bezeichnet wird,
- Berechnen der Korrelationsfunktionen $s(f_i, t_k, \tau)$ aller Frequenz-Zeit-Hypothesenpaare $(f_i, t_k)$, wobei $t_k$ ein Zeitpunkt zwischen $t_0$ und $t_n$ ist, $\tau$ die zeitliche Verschiebung zwischen dem empfangenen pseudozufälligen Code und dem gesendeten pseudozufälligen Code ist,

**dadurch gekennzeichnet, dass** es darüber hinaus Folgendes beinhaltet:

- Erfassen, von wenigstens einem Trägheitssensor (14), von Informationen über aufeinander folgende Positionen der Bewegung des mobilen Empfängers zwischen den Zeitpunkten $t_o$ und $t_n$;
- Ableiten, von den Informationen über aufeinander folgende Positionen, eines Doppler-Effekts zwischen dem mobilen Empfänger und dem Satelliten zwischen den Zeitpunkten $t_0$ und $t_n$, und Ermitteln einer Ent-

wicklung der Frequenz $f_i$ zwischen den Zeitpunkten $t_0$ und $t_n$, die dem Doppler-Effekt entspricht,

- Senden einer ersten Anfangsfrequenzhypothese $f_1$ in Bezug auf die Frequenz des zum Anfangszeitpunkt $t_0$ empfangenen Signals, dann Auswählen der Entwicklungswege der Frequenz $f_1$ entsprechend den vom Trägheitssensor (14) gelieferten Positionsinformationen und den Entwicklungshypothesen der Frequenz, die in einer von den Charakteristiken des Trägheitssensors (14) bestimmten Fehlerhüllkurve (1) enthalten sind,

- Ermitteln der jeweiligen Gesamtenergie entsprechend dem Maximum der Korrelationsfunktion, die auch Korrelationspeak genannt wird, aller gewählten Entwicklungswege zwischen den Zeitpunkten $t_0$ und $t_n$, wobei die Gesamtenergie jedes gewählten Entwicklungsweges durch kohärentes Addieren von Korrelationsergebnissen zwischen dem Anfangszeitpunkt $t_0$ und dem Endzeitpunkt $t_n$ erhalten wird, wobei die Frequenz nacheinander alle Frequenzwerte annimmt, die sich auf dem gewählten Entwicklungsweg befinden,

- Validieren des Entwicklungsweges mit der höchsten Gesamtenergie,

- aufeinander folgendes Wählen aller anderen möglichen Anfangsfrequenzhypothesen und, für jede Anfangsfrequenzhypothese, Validieren des Entwicklungswegs der Frequenz des Signals mit der höchsten Gesamtenergie,

- Beschliessen, dass unter allen validierten Wegen bei jeder Frequenzhypothese der Weg mit der höchsten Energie (3) der wahrscheinlichste Weg ist und dem von dem Empfänger tatsächlich verfolgten Weg entspricht.

2. Verfahren nach Anspruch 1, **dadurch gekennzeichnet, dass**, wenn die Variation der vom Sensor gelieferten Informationen zwischen zwei Messzeitpunkten kleiner ist als ein vorbestimmter Variationsschwellenwert, beschlossen wird, dass sich der Empfänger zwischen den beiden Messzeitpunkten nicht bewegt hat, und daraufhin die Hypothese aufgestellt wird, dass die Frequenz bei der Integration stabil ist.

FIG.1

FIG.2

FIG.3

FIG.4

**RÉFÉRENCES CITÉES DANS LA DESCRIPTION**

**Documents brevets cités dans la description**

- US 20060115022 A
- US 20060012515 A